(19)

Europäisches
Patentamt

European
Patent Office

Office européen
des brevets

(11) **EP 1 780 924 A1**

(12) **EUROPEAN PATENT APPLICATION**

(43) Date of publication:
**02.05.2007 Bulletin 2007/18**

(51) Int Cl.:
***H04L 1/00*** (2006.01)  ***H04L 1/06*** (2006.01)

(21) Application number: **05023789.0**

(22) Date of filing: **31.10.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicants:<br>• **SIEMENS AKTIENGESELLSCHAFT**<br>  **80333 München (DE)**<br>• **Fraunhofer-Gesellschaft zur**<br>  **Förderung der angewandten Forschung e.V.**<br>  **80686 München (DE)** | (72) Inventors:<br>• **Haustein, Thomas**<br>  **13187 Berlin (DE)**<br>• **Jungnickel, Volker, Dr.**<br>  **10318 Berlin (DE)**<br>• **Schulz, Egon, Dr.**<br>  **80993 München (DE)**<br>• **Zirwas, Wolfgang**<br>  **82194 Gröbenzell (DE)**<br><br>(74) Representative: **Berg, Peter**<br>  **Siemens AG**<br>  **Postfach 22 16 34**<br>  **80506 München (DE)** |

(54) **Method to determine the number of data streams to be used in a MIMO system**

(57)    The invention relates to a method to determine a transmission mode to be used at a MIMO-transmitter. The determination of an optimum transmission mode is done at the side of a MIMO-receiver. The receiver calculates for each stream of a maximum number of received streams an effective SINR-value for a given first linear dispersion code LDC. The SINR value of each stream is used to select, according to a desired BER target, a suitable modulation alphabet for each stream. A sum-rate is calculated over all streams and a first stream with a minimum effective SINR value is separated and is not considered furthermore. A linear dispersion code LDC with a smaller code rate than the first linear dispersion code LDC is selected and SINR-values for the remaining N-1 streams are calculated. A new sum-rate is obtained accordingly. In case that the new sum rate of the remaining N-1 streams is smaller than the sum rate of N streams, the sum-rate calculation is terminated. In all other cases, the step of separation of a stream with smallest effective SINR, the step of selection of a linear dispersion code LDC with a smaller code rate than the linear dispersion code LDC before and the step of calculation of SINR value for remaining streams are repeated accordingly. The most suitable code rate of the linear dispersion code LDC is selected after the termination and the code rate is reported to the transmitter, together with assigned quantized effective SINR value of each stream, to allow a final decision about a optimum transmission mode at the transmitter.

FIG 1

## Description

The invention relates to a method to determine a transmission mode to be used at a MIMO-transmitter.

New wireless radio systems will enhance spectral efficiency significantly by using the spatial dimension with MIMO transmission. MIMO means multiple antennas at transmit as well as receive side.

In case that there are more than 1 antenna at Tx and/or Rx side this new degree of freedom compared to a single input single output (SISO) system may be exploited in mainly 3 different ways.

The simplest way is to use the additional antennas or AEs as a further source of diversity. Diversity is especially helpful for fast varying radio channels which exhibit small scale fading as it might be the case for fast moving UEs with nearby reflectors. Maximum Ratio Combining (MRC) yields the highest performance and may be implemented at the Tx side by the well known Alamouti scheme or generally by space time coding. The implementation is quite simple as no CSI is required.

Next, Beamforming - or as special case Eigenbeamforming - improves the spectral efficiency due to an improved link budget, i.e. an improved signal to interference and noise ratio (SINR). The signal power is increased as the power is concentrated into the direction of the other station of the radio link while the interference might be reduced by placing suitable nulls in the antenna patterns. Beamforming requires at least long-term CSI and is especially useful for UEs at the cell border of wide area systems with moderate or low time variance of the radio channel.

Least, spatial multiplexing gives in case of high SNIR the highest performance gain as it opens besides time and frequency the space as a new dimension for multiplexing of data. In this case full knowledge of the so called "channel state information, CSI" is required. High performance gains are possible especially for indoor transmission and short range outdoor rich scattering environments - mainly found in "below rooftop" scenarios.

CSI might be available at Tx-, Rx- or on both Tx-Rx-side, the last resulting in highest performance but also highest complexity.

A further differentiation is linear versus non linear (NL) processing e.g. 'simple' matrix operation versus layered approaches or e.g. 'writing on dirty paper' solutions.

"Non linear, NL" processing may lead to significant performance gains at the cost of increased processing complexity. Sensitivity to CSI estimation errors might be decreased in case of NL processing at RX-side or increased if the Tx-side is doing the NL pre-processing.

Even in case of full CSI knowledge spatial multiplexing will outperform beamforming only in case of high SNR values in the order of 11dB.

Generally spatial multiplexing is more realistic for short range or indoor transmission while beamforming and diversity will be chosen for wide area and high mobility.

Right now the "UTRA MIMO Extension 25.876, version 1.80" is intended for application with HSDPA. There are several "Tx Mode Proposals" which are specified in the succeeding.

The so called "Per-antenna Rate Control, PARC" is best known from academic literature. It can be applied to any transmission scheme and therefore it is simple for migration from WCDMA to OFDM, where it is called "channel-adaptive multi-antenna bit-loading". PARC is the most stable and variable solution when very little channel information is available at a base station BS.

The so called "RC MPD" is based on the "Alamouti" scheme. Two antennas use the same modulation and coding scheme and so reduced feedback information is needed.

The so called "DSTTD-SGRC" is also known from the literature, whereas the idea is, to use sub-groups of antenna pairs. On each pair one stream is transmitted. The advantage is that someone can use more antennas at the base station BS than at a user terminal and therefore takes advantage of transmit diversity.

The so called "Single Stream Closed loop MIMO". For example there will be used 4 Tx antennas and a number of L Rx antennas. This is based on down-link beam-forming and uses single stream.

The so called "Per-User Unitary Rate Control, PU2RC" uses a fixed codebook for pre-coding and estimates the SINR for each potential pre-coding matrix from knowing the channel and the matrix from the code-book. There is a retransfer of an index of a code matrix.

The so called "TPRC for CD-SIC MIMO" uses the combination of two techniques - first the so called "Code-Domain Successive Interference Cancellation, CD-SIC" and second the so called "Tx Power Ratio Control, CD-TPRC".

The so called "S-PARC" intend to improve PARC in the low SNR region. Therefore it adaptively selects the number of antennas from which to transmit, i.e., mode, as well as selects the best subset of antennas for the selected mode.

The so called "Double Transmit Antenna Array, D-TxAA" transmits each stream via two antennas which use Eigenbeamforming. The weight vectors are the strongest Eigenvalues in the channel covariance matrix.

The so called "Spatial Temporal Turbo Channel Coding, STTCC" use multiple Tx antennas and form subgroups to transmit spatially multiplexed data. Basically, turbo channel coding is introduced

The so called "Double Adaptive Space Time Transmit Diversity with Sub-Group Rate Control, D-ASTTD-SGRC" combines STTD and periodic phase shifts at the antennas to emulate fast fading at the receiver. It is intended to improve temporal diversity at the receiver.

The so called "Single & Multiple Code Word MIMO with Virtual Antenna mapping, SCW/MCW-VA" is intended to merge some of the previously presented MIMO techniques into a single proposal like "CR-BLAST" and/or "S-PARC".

Right now only PARC matches well to FDD, but is not optimal for TDD. There is a significant potential for better schemes, based on SVD-MIMO, single- and multi-user pre-coding and so on.

For Midambel definition there are two proposals. First one defines multiple mid-amble base-codes per cell. Multiple codes increase the complexity of channel estimation.

It is the aim of the present invention, to provide a generic framework for the support of MIMO in downlink direction, especially for the so called "UTRA FDD LTE" air interface.

This aim is solved by the features of claim 1. Advantageous details of the invention are described by the features of the succeeding claims.

The invention is based on a simplified transmit-receive chain. The receiver determines the actually optimum MIMO algorithm iteratively and based on a lookup table. This will be described in the succeeding.

The algorithm starts with a maximum number of streams $Q\_start = min(M,N)$ in a first iteration. An effective SINR for each stream is calculated.

With bit loading for a desired BER target, a suitable modulation alphabet is found via a predefined lookup-table for each stream and a data-sum-rate over all streams is calculated and stored.

In a second iteration, the stream with the smallest effective SINR is "switched off" - that is to say, that the effect of this stream is not considered any more.

The "linear dispersion code, LDC" with the next smaller code rate is selected, e.g. (N-1)/M, and the corresponding values of the SINR for the subset of N-1 streams are computed.

After a new bit loading a new sum rate is obtained. If the new sum rate with N-1 streams is smaller than with N streams the algorithm is terminated.

Otherwise - in a third iteration - the one stream with the smallest effective SINR is switched off within the remaining N-1 streams. The LDC with next smaller code rate (N-2)/M is selected and the steps are repeated accordingly.

The algorithm inherently determines the optimal number of streams for multiplexing and proceedings are terminated after Q_start iterations max.

The bit error rate is kept below a certain threshold for all streams despite the fading in the wireless channel.

For the feedback to the transmitter, the best LDC code rate and the quantized effective SINR on each stream are reported to the base station or transmitter, where the final decision about the transmission mode is made.

The predefined lookup table provides for each algorithm the achievable capacity which would require otherwise complex calculations which are beyond the capabilities of typical HW in case of high data rate transmission.

So starting at SMUX iteratively the transmission scheme with the highest performance is being found and will end up in bad scenarios in pure diversity transmission.

In case the feedback channel breaks down, the MIMO algorithm falls down to the most robust mode, i.e. full diversity, so also adaptation to the available feedback/ channel state information is provided.

The concept allows integration of even more challenging algorithms like nonlinear pre-coding - requiring even higher accuracy for the channel state information but resulting in highest capacity.

The overall concept fulfils the adaptation of power and modulation schemes to each sub-carrier/ chunk as well as to the spatial dimension of the scenario, i.e. the rank of the channel matrix as well as the actual SNIR.

Because of the proposed overall concept there is an allowance of seamless adaptation of MIMO algorithms to varying radio environments, always giving the maximum performance (as the mathematical problem is not convex, analytical proof that indeed the global maximum is already found by this algorithm was not possible yet but at least the local maximum is found and it is expected that the performance is near to the global optimum).

Signal processing complexity is only about two times that of MIMO processing without adaptation so it can be easily integrated into existing hardware.

The approach is quite straight forward and integrates other proposals like per antenna rate control. Additionally it is extendable to special MIMO processing algorithms which might come up at standardization, so should have good chances in standardization process.

In the LTE down-link, transmission will be based on OFDM. With OFDM the same fundamental MIMO algorithms developed for narrowband transmission can be used on each OFDM sub-carrier for broadband transmission as well. There is no cross-talk between the resources at least in the frequency domain and this reduces the computational complexity at the terminal significantly.

In order to support more transmit antennas at the base station than at the terminal, there is the need of some kind of a "gear box" at the transmitter, adapting the number of spatially multiplexed streams to the number of transmit antennas at the base station.

There is a generic framework how to realize this functionality using "linear dispersion codes, LDC". In the succeeding a structure is quoted from ,,High-Rate Codes That Are Linear in Space and Time", Hassibi and Hochwald, IEEE TRANSACTIONS ON INFORMATION THEORY, VOL. 48, NO. 7, JULY 2002 (referred as [1]): "Suppose that there are $M$ transmit antennas, N receive antennas, and an interval of T symbols available ... during which the propagation channel is constant and known to the receiver. The transmitted signal can then be written as a MxT matrix S that governs the transmission over the M antennas during the interval $T$.... assume that the data sequence has been broken into Q substreams and that the streams are mapped onto complex symbols chosen from an arbitrary, say -PSK or -QAM, signal constellation. The transmitted signal is then defined in the space-time domain as:

$$S = \sum_{q=1}^{Q} \left( \alpha_q A_q + j\beta_q B_q \right)$$

$$(1)$$

where the real scalars $\{\alpha_q, \beta_q\}$ are determined by

$$s_q = \alpha_q + j\beta_q \; . \; "$$

$$(2)$$

The matrices $A_q$ and $Bq$ specifies the mapping of the symbols in the space-time domain. Many MIMO transmission schemes (as Alamouti's code, the spatial multiplexing in V-BLAST, antenna selection etc.) can be represented by the corresponding matrices Aq and $Bq$.

A switching between different MIMO schemes can be realized by selecting the appropriate LDC and the corresponding matrices $Aq$ and $Bq$. So it is possible to exchange the number of active data streams rapidly and to adapt the LDC code rate Q/M to the time-variant channel condition.

Iterative stream control is an extension of the per-antenna rate control (PARC) adapted to the use of LDCs. PARC in combination with a V-BLAST detector asymptotically achieves the open-loop MIMO capacity.

This is shown in "APPROACHING THE MIMO CAPACITY WITH A LOW-RATE FEEDBACK CHANNEL IN V-BLAST", CHUNG, LOZANO, HUANG, SUTIVONG, CIOFFI, EURASIP JASP 2004:5 (2004) 762-771 (referred as [2]), based on Shannon's gap concept "Proc. of the I.R.E.", Shannon, Jan. 1949, pp. 10-21, (referred as [3]).

But that concept only succeeds in systems with orthogonal channels, which is not true for MIMO detectors right now. In practise, the original algorithms in [2] must not guarantee a pre-defined bit error rate.

Experience with a correspondingly modified iterative PARC algorithm on a real-time MIMO test-bed shows that the modified PARC algorithm makes the MIMO transmission much more robust in general and it adapts the transmission chain very well also to rank-deficient channels where non-adaptive schemes with suboptimal detection may experience outage - referring to [4] "Over-the-air demonstration of spatial multiplexing at high data rates using real-time base-band processing", Jungnickel, Haustein, Forck, Krueger, Pohl, von Helmolt, Advances in Radio Science (2004) 2: 135-140.

PARC can be combined with LDC as follows.

The channel-aware adaptation of the modulation levels and powers can be interpreted as a switching between different modulation alphabets by which the streams are individually mapped onto the real scalars $\{\alpha_q, \beta_q\}$ in (1).

A practical control variable is the effective signal-to-interference-and-noise ratio (SINR) for each data stream after the detector. It can be predicted at the receiver based on the known channel and detector structure. Using the effective SINR for each stream, a decision can be made which modulation is supported for a given stream (which is also called bit loading)

But so far the best number of streams for the LDC is unknown. This number is found using an iterative method or algorithm performed at the receiver - according to the present invention.

while in the first option, the scheduling is actually performed at a terminal, in the second option the final decision about the transmission mode is made at a base station.

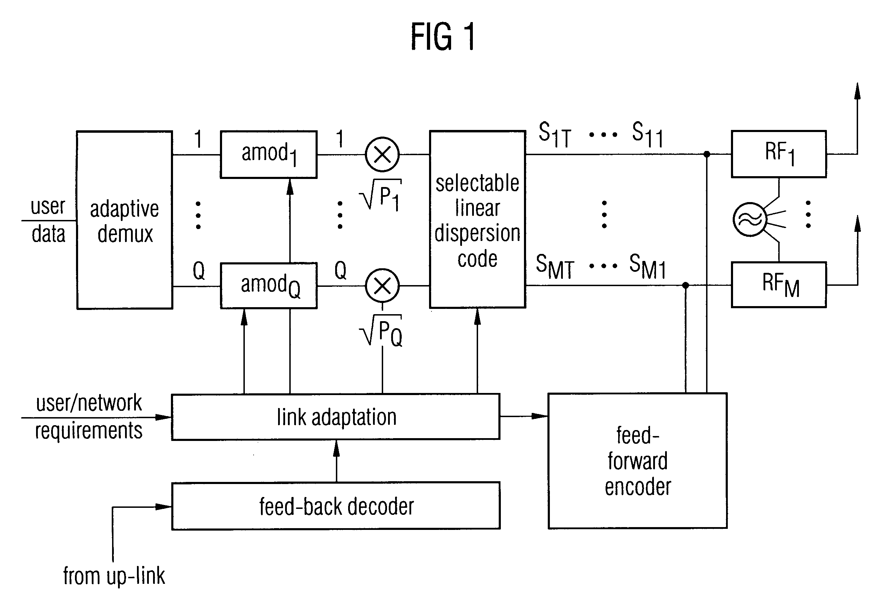

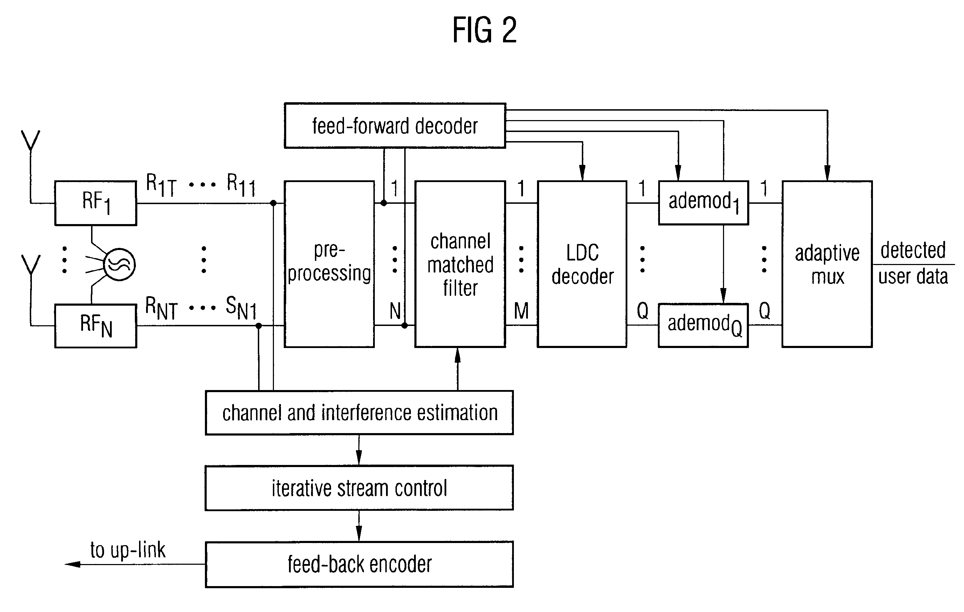

A corresponding transmit-receive chain is shown in Figures FIG 1 and FIG 2, where FIG 1 shows a base station transmitter for MIMO-LTE down-link and FIG 2 shows a mobile terminal receiver for MIMO-LTE down-link.

The transmitter allows selection between different LDC as well as adaptive modulation on each stream. This is steered from the link adaptation unit based on feed-back information and on user or network requirements.

The receiver features an LDC decoder and adaptive demodulation units for each stream. Based on the estimated channel coefficients and interference levels, the iterative stream control determines the optimal LDC code rate and either the modulation alphabet or the post-detection SINR on each stream which is then reported to the base station via the fed-back link. The link adaptation unit at the base station takes this into account as well as user and network requirements from upper layers and finally it defines the used transmission scheme. This information is encoded again and transmitted in the header before the data block (fed-forward link). In practise, the decoded feed-forward information steers the entire adaptive detection unit at the receiver.

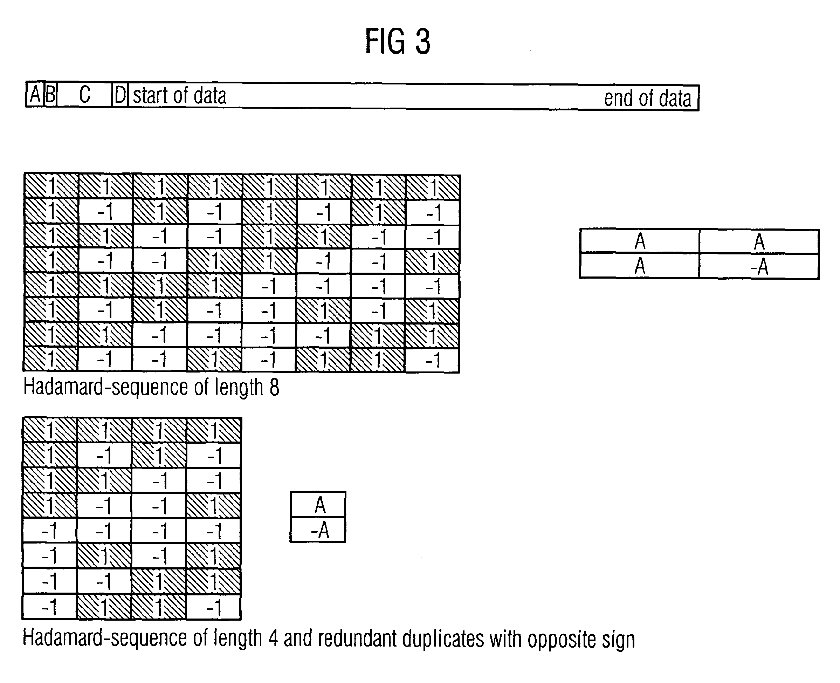

FIG 3 shows a structure of a transmission frame.

The preambles A and B are used for synchronisation and adjustment of a AGC, while preamble C is used for MIMO channel estimation.

After the calculation of the spatial MIMO filter the signals in preamble D can be detected like data but with sequence correlation circuit.

There is also an example of orthogonal sequences to signal different modulation levels. A second set of half the length is given which can be used to reduce the number of symbols by a factor of 2 or to achieve a further correlation gain while averaging over the original length.

In addition, the power allocation to be used can be detected by using different amplitudes for the (+/-1) signals instead of unity signals.

This results in several advantages:

- very robust signalling especially for all higher modulation schemes to be used (e.g. 16-QAM)
- immediate detection of the signalled information is possible with a correlation circuit by simply adding or subtracting the detected signal. Standard detection of FEC often produces significant delays, e.g. Viterby detection or Turbo-detection and can become very complex.
- due to the immediate detection of the modulation levels the modulation detector (e.g. QAM detector) the demodulator is always matched to the data even if the feed-back link which signalled the modulation has an unknown delay of several frames.
- with OFDM and bundling of sub-carriers for certain uses the signalling can be done in parallel for different users at the same time.

**Claims**

1. Method to determine a transmission mode to be used at a MIMO-transmitter,

  - whereas the determination of a optimum transmission mode is done at the side of a MIMO-receiver,
  - whereas the receiver calculates for each stream of a maximum number of received streams an effective SINR-value for a given first linear dispersion code LDC,
  - whereas the SINR value of each stream is used to select, according to a desired BER target, a suitable modulation alphabet for each stream,
  - whereas a sum-rate is calculated over all streams,
  - whereas a first stream with a minimum effective SINR value is separated and is not considered furthermore
  - whereas a linear dispersion code LDC with a smaller code rate than the first linear dispersion code LDC is selected,
  - whereas SINR-values for the remaining N-1 streams are calculated and a new sum-rate is obtained accordingly,
  - whereas in case that the new sum rate of the remaining N-1 streams is smaller than the sum rate of N streams, the sum-rate calculation is terminated,
  - wherein, in all other cases, the step of separation of a stream with smallest effective SINR, the step of selection of a linear dispersion code LDC with a smaller code rate than the linear dispersion code LDC before and the step of calculation of SINR value for remaining streams are repeated accordingly, and
  - wherein the most suitable code rate of the linear dispersion code LDC is selected after the termination and the code rate is reported to the transmitter, together with assigned quantized effective SINR value of each stream, to allow a final decision about a transmission mode at the transmitter.

2. Method according to claim 1, whereas the selection of the suitable modulation alphabet according to the desired BER target is done with a predefined look-up table.

3. Method according to claim 1, whereas a sum bit rate is used as sum rate.

4. Method according to claim 1, whereas a number of streams, which has to be used for transmission, is used as transmission mode.

5. Method according to claim 1, whereas a predefined threshold is used as bit error rate.

## FIG 1

FIG 2

## FIG 3

A B C D start of data

end of data

| A | A |
|---|---|
| A | -A |

Hadamard-sequence of length 8

| A |
|---|
| -A |

Hadamard-sequence of length 4 and redundant duplicates with opposite sign

**European Patent Office**

**EUROPEAN SEARCH REPORT**

Application Number

EP 05 02 3789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 255 369 A (TELEFONAKTIEBOLAGET LM ERICSSON) 6 November 2002 (2002-11-06) * paragraph [0059] * * paragraph [0063] * ----- | 1-5 | H04L1/00 H04L1/06 |
| Y | GRANT S ET AL: "Per-antenna-rate-control (PARC) in frequency selective fading with SIC-GRAKE receiver" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1458-1462, XP010786866 ISBN: 0-7803-8521-7 * page 1460, right-hand column, paragraph 3 * ----- | 1-5 | |
| A | MUDULODU S ET AL: "A simple multiplexing scheme for MIMO systems using multiple spreading codes" SIGNALS, SYSTEMS AND COMPUTERS, 2000. CONFERENCE RECORD OF THE THIRTY-FOURTH ASILOMAR CONFERENCE ON OCT. 29 - NOV. 1, 2000, PISCATAWAY, NJ, USA,IEEE, vol. 1, 29 October 2000 (2000-10-29), pages 769-774, XP010535467 ISBN: 0-7803-6514-3 * page 771, left-hand column, paragraph 2 * ----- | 1-5 | TECHNICAL FIELDS SEARCHED (IPC) H04L |

The present search report has been drawn up for all claims

| Place of search | Date of completion of the search | Examiner |
|---|---|---|
| Munich | 16 February 2006 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 780 924 A1

## ANNEX TO THE EUROPEAN SEARCH REPORT
## ON EUROPEAN PATENT APPLICATION NO.

EP 05 02 3789

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2006

| Patent document cited in search report | | Publication date | Patent family member(s) | | Publication date |
|---|---|---|---|---|---|
| EP 1255369 | A | 06-11-2002 | WO | 02091657 A1 | 14-11-2002 |
| | | | TW | 571525 B | 11-01-2004 |
| | | | US | 2003003863 A1 | 02-01-2003 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HASSIBI ; HOCHWALD.** High-Rate Codes That Are Linear in Space and Time. *IEEE TRANSACTIONS ON INFORMATION THEORY,* July 2002, vol. 48 (7
- **CHUNG ; LOZANO ; HUANG ; SUTIVONG ; CIOFFI.** APPROACHING THE MIMO CAPACITY WITH A LOW-RATE FEEDBACK CHANNEL IN V-BLAST. *EURASIP JASP,* 2004, vol. 5, 762-771
- **SHANNON.** *Proc. of the I.R.E.,* January 1949, 10-21
- **JUNGNICKEL ; HAUSTEIN ; FORCK ; KRUEGER ; POHL ; VON HELMOLT.** Over-the-air demonstration of spatial multiplexing at high data rates using real-time base-band processing. *Advances in Radio Science,* 2004, vol. 2, 135-140